Europäisches Patentamt

European Patent Office

Office européen des brevets

(11) Veröffentlichungsnummer: **0 224 063**
**A2**

(12) **EUROPÄISCHE PATENTANMELDUNG**

(21) Anmeldenummer: 86114997.9

(22) Anmeldetag: 29.10.86

(51) Int. Cl.⁴: **E 04 C 2/52**

(30) Priorität: 29.11.85 DE 3542245

(43) Veröffentlichungstag der Anmeldung:
03.06.87 Patentblatt 87/23

(84) Benannte Vertragsstaaten:
BE CH FR GB IT LI NL SE

(71) Anmelder: Grotjan, Hartmut, Dipl.-Ing.
Seester 31
D-2201 Kurzenmoor(DE)

(72) Erfinder: Grotjan, Hartmut, Dipl.-Ing.
Seester 31
D-2201 Kurzenmoor(DE)

(74) Vertreter: Kretzschmar, Otto Robert, Dipl.-Ing.
Beim Strohhause 34
D-2000 Hamburg 1(DE)

(54) Wandplatte für Bauwerke.

(57) Eine Wandplatte für Bauwerke, mit einem Wandplattenkörper und einer an wenigstens einer Plattenseite sich über die Wandplatte (1) erstreckenden Seitenwandplatte (7) hat einen Raum (8), der sich über die Fläche der Wandplatte (1) hinter einer durch eine Seitenwandplatte (7) mit Wärmeleitvermögen geschlossenen Seite erstreckt. In diesem Raum ist eine Temperierungsquelle (9) angeordnet, welche sich als Wärmequelle unten und als Kühlquelle oben in dem Raum (8) befindet. Dieser Raum ist oben und unten durch Begrenzungsbauteile (2, 3; 22, 23) abgeschlossen. An der Temperierungsquelle (9) sind Anschlüsse für ein strömungsfähiges Wärmeträgermedium angeordnet, wobei sich in dem im wesentlichen abgeschlossenen Raum je nach Art der Wärmeeinführung eine Konvektionsströmung von unten nach oben oder von oben nach unten ergibt.

F i g.3

**DIPL.-ING. O. R. KRETZSCHMAR**

PATENTANWALT

2 HAMBURG 1
BEIM STROHHAUSE 34
RUF 040/24 67 43
TELEX 2 173 645 OKPA D

ZUGELASSENER VERTRETER BEIM
EUROPÄISCHEN PATENTAMT

0224063

Herr Architekt
Dipl.-Ing. Hartmut Grotjan
Seester 31

D-2201 Kurzenmoor

K/hö - 6648

28. Okt. 1986

Anwaltsakte: 6648

## Wandplatte für Bauwerke

Die Erfindung betrifft eine Wandplatte für Bauwerke, mit einem Wandplattenkörper und einer an wenigstens einer Plattenseite sich über die Wandplatte erstreckenden Seitenwandplatte sowie Anschlüssen für ein Wärmeträgermedium.

Wenn die Wandplatte eine Außenwandplatte ist, dann kann an der einen Seite des Wandplattenkörpers eine Isolierschicht und eine witterungsbeständige Außenschicht angeordnet sein.

Es ist bekannt, in Wandplatten, die beispielsweise aus einer Isolierschicht mit Styropor und einer Außenschicht aus Ziegelriemchen bestehen, in die Styroporschicht Rohre einzubetten, durch welche ein über Anschlüsse zu- und abgeleitetes strömungsfähiges Medium hindurchgehen kann, um zu erhitzen.

Diese Ausführung hat sich nicht bewährt, vor allem weil die verschiedenen Eingänge, die zum unteren Rand hin offen

KONTEN: DRESDNER BANK (BLZ 200 800 00) KONTO-NR. 9 229 371 · POSTSCHECK HAMBURG (BLZ 200 100 20) NR. 1937 66-20

sind, einzeln angeschlossen und gespeist werden müssen.
Das ist aufwendig und setzt bei einem Bau genaue Ausrichtung voraus, wobei gegebenenfalls flexible Verbindungsstücke angeordnet werden müssen.

Wenn im Sinne der vorliegenden Erfindung von einem strömungsfähigen Wärmeträgermedium die Rede ist, wird ein
gasförmiges oder flüssiges Medium einbezogen. Der Ausdruck
"Wärmeträgermedium" bezieht sich allgemein auf ein Temperaturübertragungsmedium. Hierbei wird einbezogen, daß mit
diesem Medium nicht nur eine Temperatur erhöht wird, d.h.
Wärme übertragen wird, sondern auch, daß eine Temperatur
vermindert, also gekühlt wird.

Der Erfindung liegt die Aufgabe zugrunde, eine Wandplatte
der oben angegebenen Art so auszuführen, daß große Wärmestrahlungsflächen geschaffen werden, über welche das Wärmepotential bzw. Temperaturpotential eines Wärmeträgermediums bei besonders guter Verbreitung über eine Seitenwand der Wandplatte möglichst wirkungsvoll abgegeben wird,
wobei gleichzeitig der Installationsaufwand gering bleiben
soll.

Diese Aufgabe löst eine Wandplatte für Bauwerke der eingangs angegebenen Art dadurch, daß die Anschlüsse an einer
Temperierungsquelle in einem Raum vorgesehen sind, der
sich über die Fläche der Wandplatte hinter einer durch
eine Seitenwandplatte mit Wärmeleitvermögen geschlossenen
Seite erstreckt, wobei die Temperierungsquelle als Wärme-

- 3 -

quelle unten und als Kühlquelle oben in dem Raum angeordnet ist, der oben und unten durch Begrenzungsbauteile
abgeschlossen ist.

Damit ergibt sich für eine Wandplatte eine Lösung ohne
Durchströmung, sondern mittels Konvektion in einem zumindest quasi geschlossenen System, in dem das gesonderte
Wärmeträgermedium im Wandelement nach oben steigt und bei
Abkühlung nach unten abfällt. Die Seitenwandplatte mit
Wärmeleitvermögen hat dieses Wärmeleitvermögen entweder
durch eine dünne Ausführung oder bzw. in Verbindung damit
durch entsprechende Materialeigenschaften.

Das in dem Raum befindliche und in ihm strömende Wärmeträgermedium führt in dieser geschlossenen Ausführung auch
zusätzlich zu einer besonders günstigen Geräuschisolation.

Zusätzlich entsteht eine gute Wärmedämmung durch den
Raum, der zumindest im wesentlichen geschlossen ist.

Der seitliche Raum ist in einer bevorzugten Ausführung in
sich geschlossen. Hierdurch wird eine besonders bevorzugte
Lösung geschaffen. Eine solche Ausführung schafft praktisch
ein Heiz- oder Kühlelement als Wandplatte.

Einbezogen wird in einer vorteilhaften Ausführungsform,
daß der Raum von einer Vielzahl von im wesentlichen vertikalen Kanälen gebildet wird, die jedoch unten und/oder oben
miteinander verbunden sind, wobei der Raum durch im wesentlichen senkrechte Trennungsstreifen unterteilt ist,
die mit ihren Rändern in die an den Plattenseiten benachbarten Materialien der Wandplatte, den Wandplattenkörper
und die Seitenwandplatte eingebettet sind und mit Abstand
vom unteren und oberen Rand des Raumes enden. Auch in einer solchen Ausführung wird das Merkmal des flächigen
Temperierungselementes aufrechterhalten. Solche Kanäle
können auch in Schichten der Wandplatte eingebettet sein.
Insoweit sind Räume in kanalartiger Ausgestaltung und in
Flächenerstreckung genannt. Die Trennungsstreifen können
aus wärmeleitfähigem Material bestehen, so daß sie den
Wärmeübergang verbessern. Dabei kann eine solche Unter teilung die Auf- und Abströmführungen fördern.

Vorteilhaft wirkt sich aus, wenn in dem Raum unten eine
Wärmequelle angeordnet ist, die sich im wesentlichen über
die Breite der Wandplatte erstreckt. In einer entsprechenden anderen vorteilhaften Ausgestaltung ist in dem
Raum oben eine Kühlquelle angeordnet.

Besonders bevorzugt wird aber, daß sich der Raum im wesentlichen über die Fläche der Wandplatte erstreckt. Hierdurch überstreicht das strömungsfähige Wärmeträgermedium
die Gesamtfläche der Wandplatte und bildet eine besonders
günstige Quelle für eine Strahlenheizung, bzw. auch Raumkühlung, die gesundheitsfördernd ist.

In der angegebenen Lösung wird eine Ausführung geschaffen,
in welcher das erhitzte Wärmeträgermedium nach oben
steigt und das abgekühlte Wärmeträgermedium absinkt. Durch
den Abstand der oberen und unteren Enden der Trennungsstreifen vom oberen und unteren Rand des Raumes werden hier Verteilungsräume gebildet.

Bei der Ausführung mit im wesentlichen vertikalen Kanälen bezieht der Ausdruck 'im wesentlichen' auch eine in der Erstreckung der Wandplatte diagonale Streifenanordnung ein. Nicht ausgeschlossen wird eine Ausführung der Kanäle aus im Material der Wandplatte eingebetteten rohrartigen Anordnungen, an denen aus wärmeleitendem Material bestehende Rippen angeordnet sind, die sich in das Material der Wandplatte in einer Richtung zu der Wandplattenseite erstrecken, welche eine Rauminnenwand bildet, wobei jedoch die Kanäle am oberen und unteren Rand der Wandplatte in Querrichtung verbunden sind.

Mit besonderem Vorteil ist der Raum gegebenenfalls in Form von Kanälen parallel zur Flächenerstreckung der Wandplatte unterteilt, und wenigstens eine Unterteilungswand endet mit Abstand vom oberen und unteren geschlossenen Rand des Raumes, gegebenenfalls der Kanäle, wobei eine sich im wesentlichen in der Mitte des Raumes erstreckende Unterteilungswand aus einem wärmeisolierenden Material bevorzugt wird.

Bei dieser Ausführung wird bevorzugt, daß die Wärmequelle in diesem Raum im Bereich zwischen der Unterteilungswand und einer eine Innenseite bildenden Seitenwandplatte der Wandplatte unten bzw. die Kühlquelle im Bereich zwischen der Unterteilungswand und einer eine Innenseite bildenden Seitenwandplatte der Wandplatte oben angeordnet sind.
Durch diese Anordnung wird jeweils der Umlauf im geschlossenen System einer Wandplatte gefördert und eine besonders
günstige Temperierung erreicht. Dabei kann wegen der großen Abstrahlungsflächen das Temperaturniveau des Wärmeträgermediums gering gehalten werden und durch die besondere Ausgestaltung der Wandplatte ist auch der Herstellungs-, Installations- und Kostenaufwand gering.

Um den Wärmeaustausch zu verbessern, wird zweckmäßig einbezogen, daß die Unterteilungswand wenigstens im oberen Bereich der Wandplatte mit Öffnungen versehen ist. Hierdurch
können zwischen den Auf- und Abströmungskammern Querströmungen entstehen, die gegebenenfalls durch besondere Formgebung
der Öffnungen gefördert werden können. Solche Querströmungen können unter Einfluß äußerer Verhältnisse auf ein
Bauwerk auftreten, wenn beispielsweise äußere Sonneneinstrahlung die Abströmräume erhitzen, so daß dann ein Übergang zu Abschnitten von Aufströmungsräumen möglich ist,
die unter gleichen Bedingungen stehen. In einer zweckmäßigen Ausgestaltung haben die Öffnungen über ihre Höhe
verschiedenen Querschnitt. Durch eine solche Ausgestaltung
wird die Gleichmäßigkeit einer Wandheizung gefördert.

Auch unter diesem Gesichtspunkt sind in einer besonderen
Ausgestaltung in wenigstens einem der Teilräume neben der
Unterteilungswand, gegebenenfalls am oberen oder bei einer
Kühlung unteren Rand der Unterteilungswand, Fördervorrichtungen für das strömungsfähige Wärmeträgermedium angeordnet. Dieses fördert dann den Umlauf des Wärmeträgermediums in besonderer Weise. Einbezogen wird dabei zweckmäßig, daß die Fördervorrichtungen, insbesondere in Form von Propellerpumpen, in Abhängigkeit von einer äußeren Wärmestrahlung, gegebenenfalls der Sonne, ein- und ausschaltbar sind.

Die Fördervorrichtungen sind zweckmäßig wenigstens an einem der Ränder der Unterteilungswand, welche den oberen und unteren Rand umfassen, angeordnet.

In einer weiteren vorteilhaften Ausgestaltung wird einbezogen, daß das von einer Wandplatte gebildete geschlossene System eine besonders bevorzugte Ausführungsform der Erfindung ist, das aber dadurch abgewandelt werden kann, daß an einer Seitenwandplatte, hinter welcher der Raum für das strömungsfähige Wärmeträgermedium angeordnet ist, oben und unten Ein- und Austrittsöffnungen für das strömungsfähige Wärmeträgermedium angeordnet sind, wobei diese Öffnungen zu einem von den Wandplatten umbauten Innenraum gerichtet sind und wenigstens ein Teil der Ein- und/oder Austrittsöffnungen im Querschnitt einstellbar ist und Einstellschieber vorgesehen sind.

Hierdurch wird das geschlossene System mit einem offenen System als by-pass kombiniert, ohne die Auf- und Abströmung im wesentlichen zu beeinträchtigen, aber es wird, wenn das Wärmeträgermedium Luft ist, eine direkte Raumheizung mit Umströmung als Parallelströmungsanordnung eingeführt. Es versteht sich, daß diese Ausführung nur für das strömungsfähige Wärmeträgermedium Luft vorgesehen ist. Dabei sind
die Ein- und Austrittsöffnungen zweckmäßig eingeschnürt,
um zu gewährleisten, daß im wesentlichen die Wandplatte
als Heizelement ihre Funktion behält und lediglich zusätzlich ein Raum erwärmt wird.

Soweit die Erfindung bisher erläutert ist, wird sie dadurch
zweckmäßig näher definiert, daß der Raum hinter einer insbesondere mehrschichtigen Plattenausführung einerseits und
einer verhältnismäßig dünnen Wandplattenbegrenzungsschicht
als Seitenwandplatte andererseits angeordnet ist.

In einer besonderen Ausführung sind zwei Räume beiderseits
eines gegebenenfalls tragenden, mittleren Wandplattenkörpers vorgesehen, wobei die Wandplatte für jeden der Räume
eine Temperierungsquelle, d.h. eine Wärme- oder Kühlquelle
aufweist. Der mittlere Wandplattenkörper kann eine Zwischenwandplatte sein, welche tragfähige Eigenschaften hat.

Vorteilhaft besteht die Temperierungsquelle jeweils aus
einem Heiz- oder Kühlrohr, das wenigstens einen nach außen
gerichteten Anschluß aufweist. Solche Rohre können auch
als Rippenrohre ausgestaltet sein. Die Anschlüsse sind
zweckmäßig als Zu- bzw. Abführungsstutzen für das Wärmeträgermedium vorgesehen und durch ein Ventil regelbar.

In einer anderen zweckmäßigen Ausführung ist die Wärmequelle als elektrische Widerstandsheizung ausgeführt.

Um nun in der Ausführung mit verschiedenen Teilräumen,
insbesondere einem Teilraum an der Innenseite der Wandplatte, eine günstige Wärmeverteilung zu erzeugen, liegt
eine vorteilhafte Ausgestaltung auch darin, daß in dem Teilraum oberhalb der Wärmequelle horizontale Querstreifen
mit Durchgängen angeordnet sind, und daß diesen Durchgangen Klappenventile vorgesehen sind, die oberhalb der Wärmequelle nach oben öffnen. Dadurch wird auch verhindert, daß
bei einer zu starken Abkühlung kaltes Wärmeträgermedium auf
die Wärmequelle absinkt.

Auch im Sinne einer besonders günstigen Verteilung und Regelung weist die Unterteilungswand in einer zweckmäßigen Ausgestaltung eine wellenförmige Profilierung auf, wobei in einer Querschnittsrichtung die wellenförmige Profilierung etwa
nach Art von Sinuswellen ausgeformt ist. Dabei wird bevorzugt, daß die wellenförmige Profilierung mit horizontalen
Wellenachsen vorgesehen ist. Hierbei wird die Reibung des
Wärmeträgermediums an den Wänden der Teilräume erhöht und dadurch die Wärmeabgabe verbessert.

Nicht ausgeschlossen wird aber, daß die wellenförmige Profilierung mit senkrechten Wellenachsen vorgesehen ist. Hierdurch kann sich die Aufteilung in verschiedene Kanäle erübrigen, wobei aber auch eine solche Profilierung den Oberflächenquerschnitt verbessert.

Es versteht sich, daß der Wandplattenkörper an der von der
Seitenwandplatte mit Wärmeleitvermögen abgekehrten Seite eine Isolierschicht und eine witterungsbeständige Außenschicht
aufweisen kann.

Die Erfindung wird im folgenden anhand von Ausführungsbeispielen erläutert, die in der Zeichnung dargestellt sind. In
der Zeichnung zeigen:

Fig. 1    einen Schnitt längs der Linie I-I in Fig. 2
          durch eine Wandplatte;

Fig. 2    eine schematische Vorderansicht der Wandplatte
          im Schnitt II-II in Fig. 1, jedoch in der Ebene
          des in ihr befindlichen Raumes mit der besonderen Ausführungsform von senkrechten Kanälen;

Fig. 3  eine der Fig. 1 entsprechende Seitenansicht einer anderen besonders vorteilhaften Ausführung einer Wandplattenausführung im Schnitt;

Fig. 4  eine entsprechende im Schnitt dargestellte Seitenansicht einer Wandplattenausführung in einer besonderen Ausgestaltung;

Fig. 5  eine Einzelansicht einer Durchtrittsöffnung zur Regelung des Querschnitts;

Fig. 6  eine Wandplatte in einer Ausführung,
die als Zwischenwand zwischen Räumen
einsetzbar ist und auch entsprechend
den anderen Darstellungen ausgestaltet
werden kann, im Schnitt;

Fig. 7  eine Ansicht einer Unterteilungswand,
wie sie beispielsweise in Fig. 3 gezeigt
ist, jedoch in einer besonderen Ausführung;

Fig. 8  eine der Fig. 3 entsprechende Ansicht
in besonderer Ausgestaltung;

Fig. 9  eine der Fig. 3 entsprechende Ansicht
mit einer Querunterteilungswand in
einem Raum unterteilt, wobei diese Ausführungsform besonders mit Ausgestaltungen
nach den Fig. 7 und 8 geeignet ist;

Fig. 10  eine Unterteilungswand in Einzeldarstellungen, wie sie in Fig. 3 vorgesehen ist, jedoch in perspektivischer Darstellung, wobei die gezeigte vertikale Richtung der Wellungen nur eine Ausführungsform darstellt;

Fig. 11    eine der Fig. 3 entsprechende Darstellung einer anderen Ausführungsform zur Kühlung einer Wand.

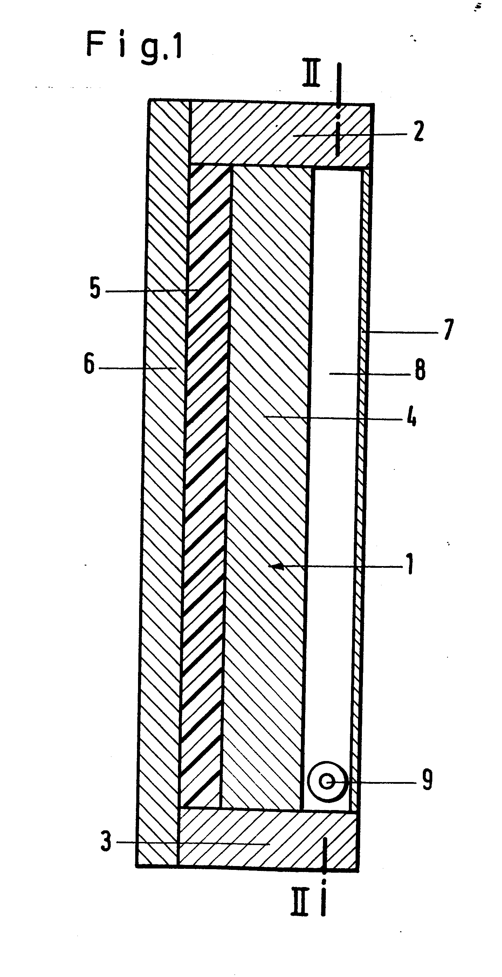

Die Erfindung wird in Form von Wandplatten erläutert. Die Fig. 1 zeigt dabei im Querschnitt eine besonders günstige Ausführung einer Wandplatte für eine Außenwand eines Gebäudes. Diese Wandplatte 1 besteht aus oberen und unteren flächigen Begrenzungsbauteilen 2, 3, beispielsweise aus Holz, Kunststoff oder dergleichen. Sie fassen den eigentlichen Wandplattenkörper 4 ein, der auch ein tragender Bauteil sein kann. An seiner Außenseite sitzen beispielsweise eine Kunststoff-Isolierplatte 5, gegebenenfalls aus Styropor, und an deren Außenseite eine Platte 6 aus einem witterungsbeständigen Material wie Ziegelriemchen, Mörtelputz oder dergleichen. An den flächigen Begrenzungsbauteilen 2, 3 ist mit Abstand von dem Wandplattenkörper 4 eine Seitenwandplatte 7 angeordnet, die an der von dem Wandplattenkörper 4 abgekehrten Seite dekorativ ausgestaltet sein kann und die Innenwand eines Raumes bildet. Diese Seitenwandplatte 7 hat besonders gutes Wärmeleitvermögen entweder aufgrund ihrer Materialeigenschaft oder ihrer Stärke, so daß in einem Raum 8 zwischen dem Wandplattenkörper 4 und der Seitenwandplatte 7 entwickelte Wärme durch diese Seitenwandplatte gut abgestrahlt werden kann.

Insofern ist ein geschlossener Raum vorhanden, in welchem unten eine Wärmequelle 9 angeordnet ist. Diese Wärmequelle kann aus einem durchgeführten Heizrohr, evtl. Rippenheiz-

- 12 -

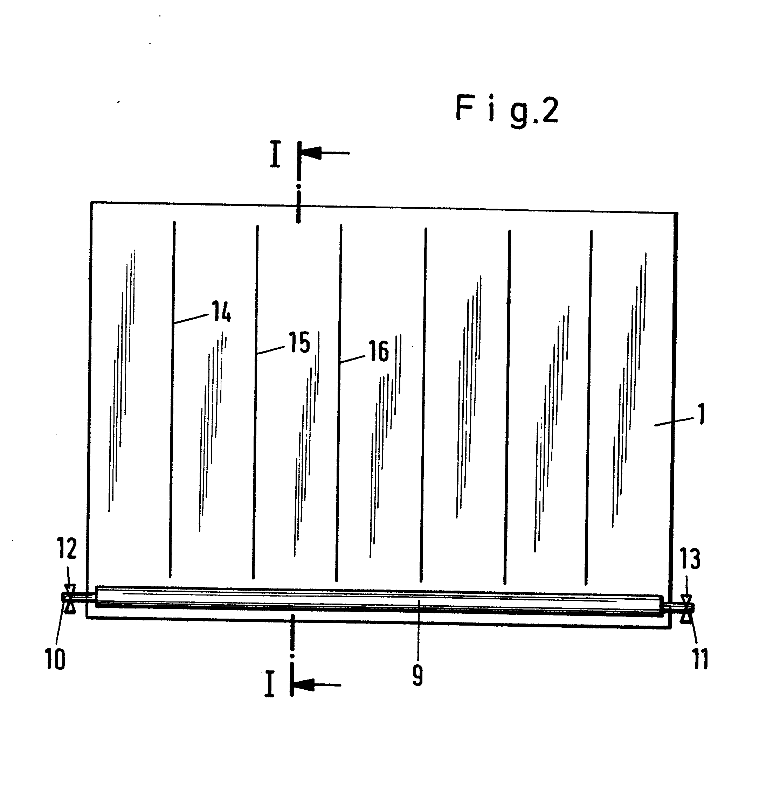

rohr bestehen oder aber auch aus einer elektrischen Widerstandsheizung, in welcher eben in der Erstreckung des Teiles 9 (siehe auch Fig. 2) elektrische Widerstände angeordnet sind.

Die Fig. 2 zeigt die Wandplatte 1 schematisch in ihrem
Umriß. Dabei ist unten auch die Wärmequelle 9 gezeigt.
Sie hat in dieser Ausführung zwei seitliche Anschlüsse 10,
11, die durch Ventile 12, 13 regelbar sind. Diese Ventile
können außerhalb der Wandplatte angeordnet sein. Die Wandplatte gemäß Fig. 1 ist in der schematischen Ansicht nach
Fig. 2 mit ihrem Raum 8 gezeigt, wobei eine besondere Ausgestaltung erkennbar ist, daß nämlich senkrechte Trennungsstreifen 14 bis 16 ... angeordnet sind. Diese enden
oben und unten mit Abstand von der oberen Begrenzung des
Raumes 8 und unten mit Abstand über der Wärmequelle 9, so
daß lediglich die senkrechte Auf- und Abströmung gefördert
wird. Dabei sind diese Trennungsstreifen zweckmäßig bezüglich Fig. 1 in dem Wandplattenkörper 4 und auch in die
Seitenwandplatte 7 eingebettet, um dort einen Wärmeübergang zu ermöglichen.

Die Ausführung nach Fig. 1 stellt eine einfache Lösung
dar, die ein geschlossenes System bildet, in welchem das
Wärmeträgermedium nach oben steigt und bei Abkühlung
nach unten absinkt. Dieses erfolgt im wesentlichen an
den Wänden.

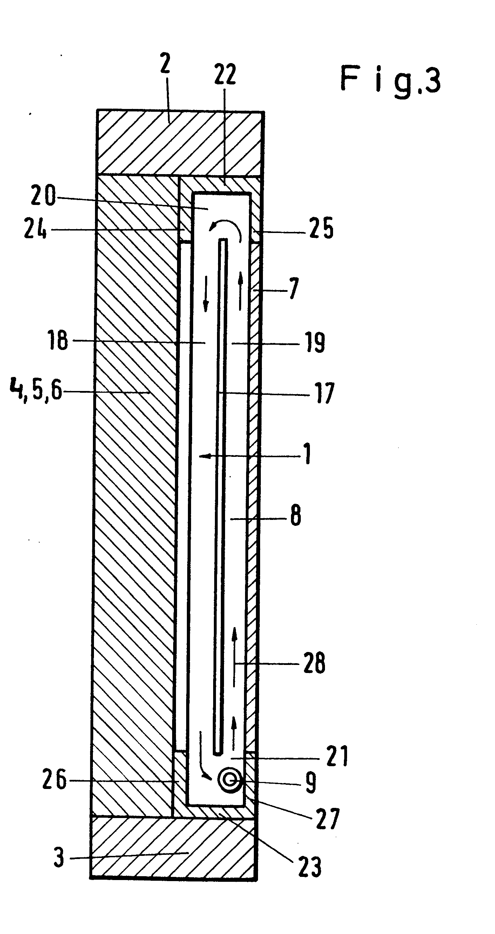

Ein solcher Kreislauf wird durch eine Wärmeplattenausführung nach Fig. 3 gefördert. Die äußere bzw. Außenwandschicht ist mit 5, 6 bezeichnet. Ferner ist eine Seitenwandplatte 7 zum Innenraum gezeichnet. Der in Fig. 1 mit
8 bezeichnete Raum ist parallel zur Flächenerstreckung
der Wandplatte durch Einsatz einer Unterteilungswand 17
in zwei Teilräume 18, 19 unterteilt, die oben bei 20 und unten bei 21 ineinander übergehen. Das obere geschlossene Ende 22 des Raumes 8 ist durch ein so bezeichnetes U-Profil und das untere entsprechend geschlossene Ende 23 durch ein anderes U-Profil bezeichnet, wobei die Schenkel 24, 25 bzw. 26, 27 der U-Profile den im ganzen mit 8 bezeichneten Raum einfassen. Dadurch wird auch eine für sich an anderen Wandplatten einbaubare Baugruppe geschaffen, die letzten Endes unten eine Wärmequelle 9 und in einem Raum 8 zwei Teilräume 18, 19 hat, die durch die Unterteilungswand 17 in der beschriebenen Weise getrennt sind. Dabei befindet sich die Wärmequelle 9 unten unter dem Teilraum 19 neben der Seitenwandplatte 7, d.h. der eine Innenseite bildenden Wand 7 der Wandplatte 1, so daß neben dieser entsprechend den Pfeilen 28 Wärmeträgermedium nach oben steigt. Dieses ist wesentlich, weil im geschlossenen System ein Kreislauf erzeugt wird, in welchem das Wärmeträgermedium außen durch den Teilraum 18 nach unten abfällt, wobei zugleich die Außenwand mit der Isolierplatte 5, 6 einer geringeren Wärmebeeinflussung unterliegt.

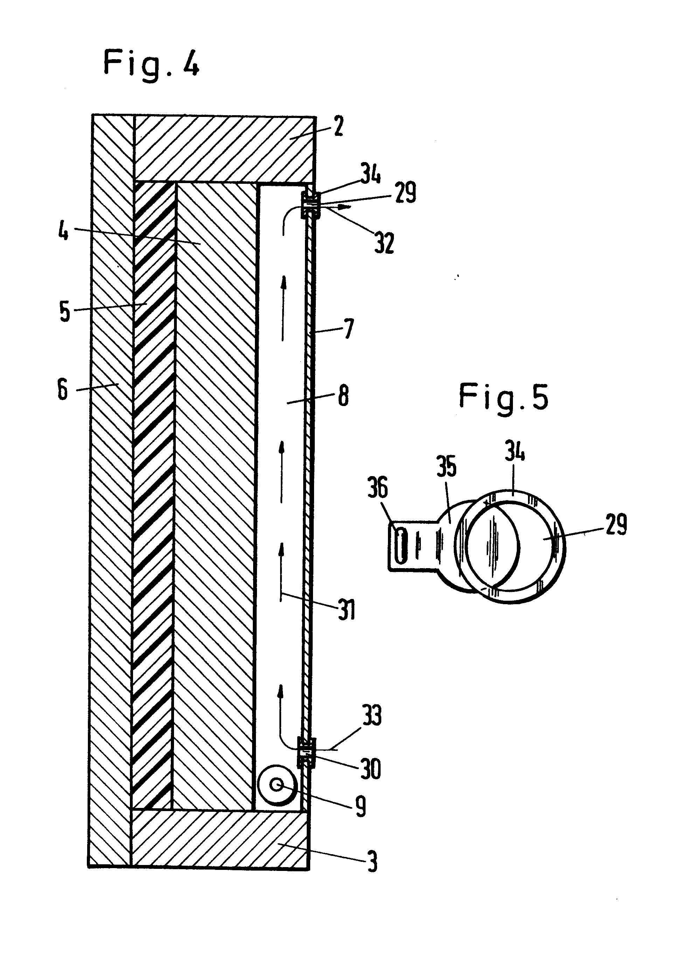

Das abfallende kühlere Wärmeträgermedium stellt dabei aber eine zusätzliche Wärmedämmung dar, wobei die innewohnende Wärmeenergie in diesem Sinne ausgenutzt wird. Die in Fig. 4 gezeigte Ausführung einer solchen Wandplatte bildet dabei eine Art by-pass, indem oben und unten an dem Raum 8, und zwar als Durchbrechung der zum Innenraum vorhandenen Seitenwandplatte 7, Öffnungen 29, 30 angeordnet sind.

In Verbindung mit der Strömung 31 über der Wärmequelle 9 ergibt sich dann ein Abzweig einer Strömung, insbesondere wenn das Wärmeträgermedium Luft ist, entsprechend den Pfeilen 32, 33, so daß dadurch eine zusätzliche Raumheizung möglich ist. Eine Öffnung 29 ist auch in Fig. 5 gezeigt. Sie befindet sich in einer äußeren Randeinfassung 34. In dieser können Schieber 35 vorgesehen sein, die durch einen Hebel 36 einstellbar sind, so daß dann eine Regelung der Abzweigströmung möglich ist.

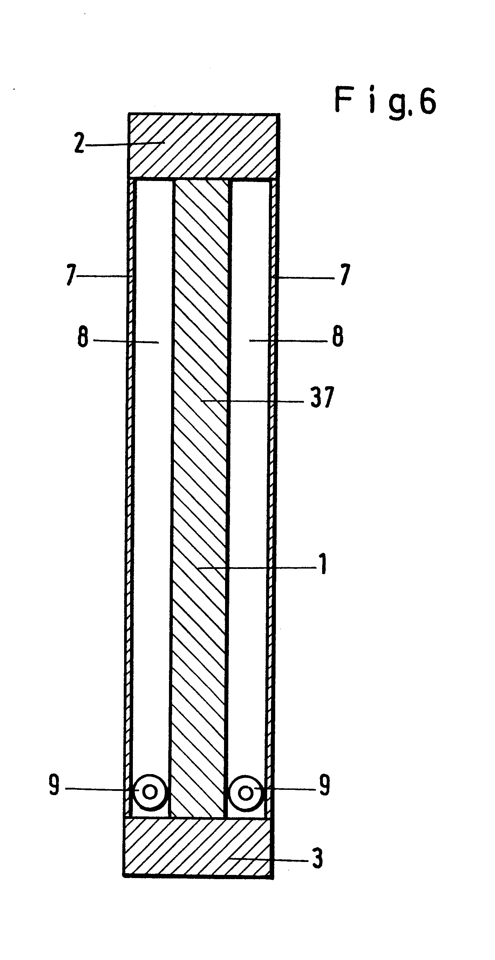

Eine besondere Ausführung zeigt eine Wandplatte 1 nach Fig. 6 mit einem mittleren Wandplattenkörper 37, an welchem außen jeweils ein Raum 8, 8' in der bisherigen Ausführung mit unteren Wärmequellen 9, 9' angeordnet ist. Die Räume 8, 8' sind zur Außenseite von relativ dünnen und gut wärmedurchlässigen Seitenwandplatten 7, 7' begrenzt, so daß dann eine zweiseitige Raumbeheizung möglich ist. Dieses gilt insbesondere auch in Verbindung mit vorteilhaften Ausgestaltungen, beispielsweise nach Fig. 3, für jeden der Räume 8, 8'.

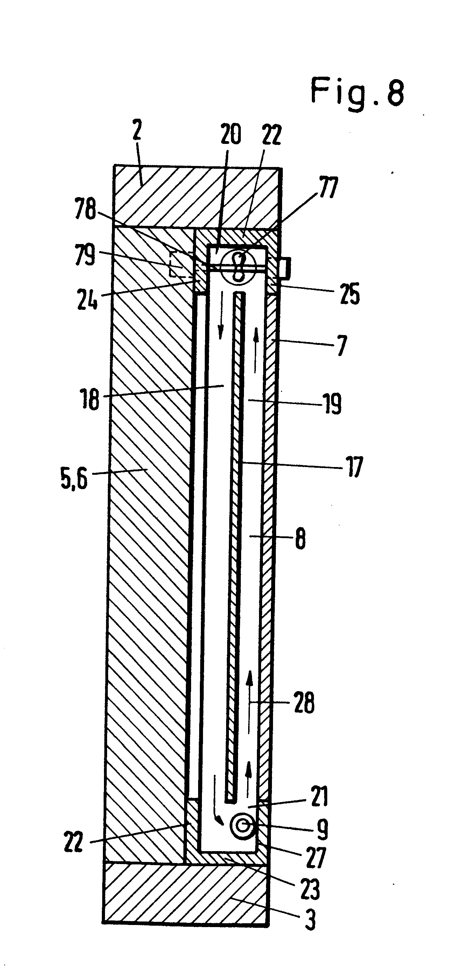

Fig. 8 entspricht im wesentlichen der in Fig. 3 dargestellten Ausführungsform mit der Ergänzung, daß im oberen Bereich des Raumes 8 der Wandplatte oberhalb der Unterteilungswand 17 im Teilraum 20 eine Fördervorrichtung 77 für das strömungsfähige Wärmemedium angeordnet ist. Diese Fördervorrichtung besteht beispielsweise aus einem Propeller, der mit 77 bezeichnet ist und über eine Welle 78 mit einem Antriebsmotor 79 in der Außenwandschicht verbunden ist. Die elektrischen Anschlüsse sind nicht näher gezeigt; sie ergeben sich aber leicht.

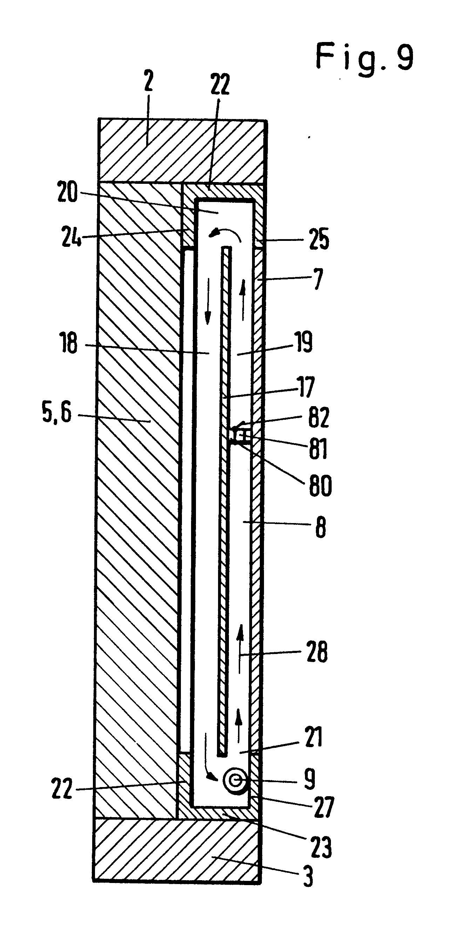

Diese Ausführung nach Fig. 8 kann grundsätzlich einbezogen werden, auch in Kombination mit einer weiteren Ausgestaltung nach Fig. 9. In dieser ist der obere Teilraum 20 offen, obgleich er auch nach der Fig. 8 ausgestaltet sein könnte, aber der Teilraum 19 besitzt einen horizontalen Querstreifen 80 oberhalb der Wärmequelle 9. Dieser Querstreifen ist mit Durchgängen 81 versehen, und an diesen Durchgängen sind insbesondere Klappenventile 82 angeordnet, wie es in Fig. 9 gezeigt ist. Diese Klappenventile 82 öffnen sich in der Strömungsrichtung gemäß Pfeil 28 und bilden daher einen Anteil für eine vorteilhafte Wärmeausnutzung auch im Zusammenhang mit der Ausführung nach Fig. 8.

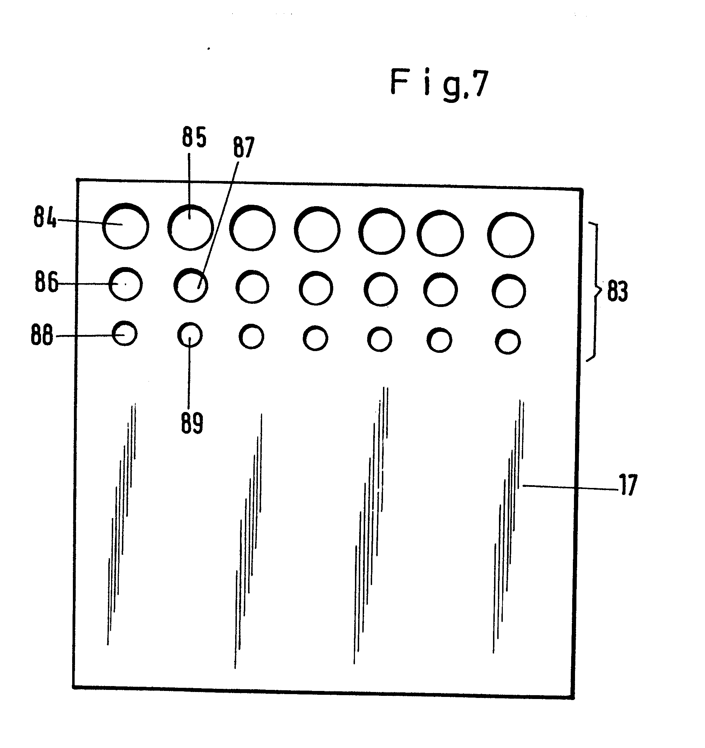

Gemäß Fig. 7 ist die Unterteilungswand 17, die in dieser Figur allein gestellt gezeigt ist, wenigstens im oberen Bereich 83 mit Öffnungen 84, 85 ...; 86, 87 ...; 88, 89 ... versehen. Solche Öffnungen sind zweckmäßig oberhalb eines horizontalen Querstreifens 80 angeordnet. Sie haben verschiedene Gestaltung in ihren Höhenanordnungen bzw. in ihren Pfeilen, so daß der Übertritt des strömungsfähigen Wärmeträgermediums auch durch die Gestaltung der Öffnungen beeinflußt wird, um eine besonders effektive Wärmeausbeute zu gewährleisten. Nur die heißeste Komponente des Wärmeträgermediums geht in dieser Ausführungsform nach oben, während andere Anteile schon vorher abströmen können.

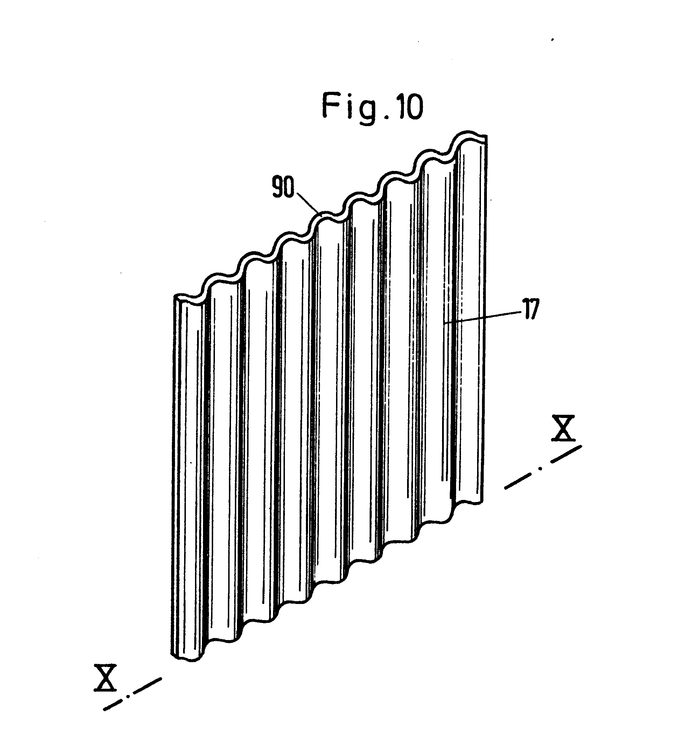

Nach Fig. 10 ist eine Unterteilungswand 17 für sich dargestellt. Diese hat in einer Querschnittsebene X - X eine wellenförmige Profilierung 90. Dadurch kann die Förderung in den Wandplatten in senkrechter Richtung erleichtert werden. Einbezogen wird aber auch bezüglich der in Fig. 10 dargestellten Unterteilungswand 17 eine um 90° versetzte Anordnung, so daß das durchströmende Wärmeträgermedium abschnittsweise verdichtet und zur Entspannung freigegeben wird, um in dieser pulsierenden Arbeit eine besonders günstige Wärmeabgabe zu erreichen.

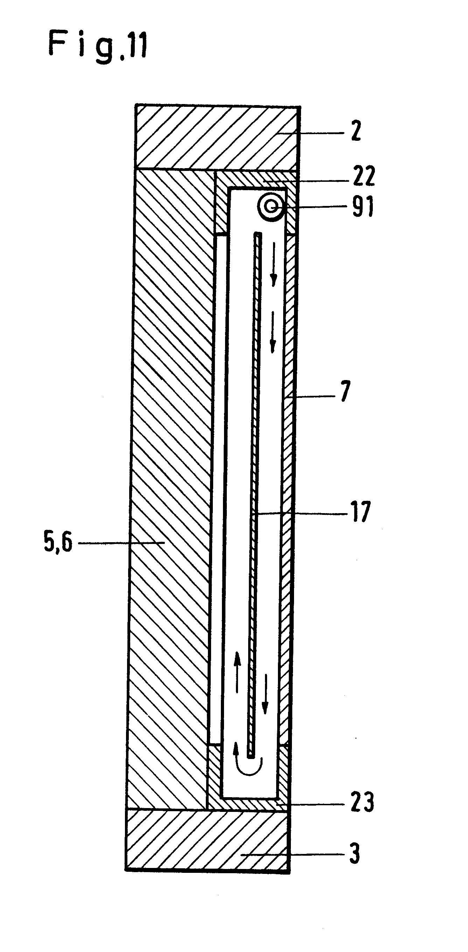

In den soweit beschriebenen Wandplatten 1 sind jeweils unten Wärmequellen 9 gezeigt. Wie einleitend gesagt ist, ist die Wandplatte auch in bestimmten Ausführungen zur Kühlung vorgesehen. Dafür gibt die Fig. 11 ein Beispiel im Vergleich mit der Ausführung nach Fig. 3. Anstelle der

- 16 -

dort vorgesehenen Wärmequelle 9 ist in Fig. 11 oben eine Kühlquelle 91 angerodnet. Diese kann mit entsprechenden Mitteln, abgestimmt auf das Kühlmedium, angeschlossen sein, wie es in Fig. 2 für die Wäremquelle 9 gezeigt ist.

Es ist erkennbar, daß nach Fig. 11 das kalte Wärmeträgermedium hinter der dünnen Platte 7 nach unten fällt und zwischen der Unterteilungswand 17 und der Außenwand 5, 6 nach oben steigt. Es versteht sich, daß die Außenwand ausgeführt sein kann, wie es in Fig. 1 deutlicher gezeigt ist.

Entsprechend können solche Kühlquellen 91 auch in den Ausführungsformen nach Fig. 1, Fig. 8, bei welcher dann die Fördervorrichtung 77 versetzt wird, und Fig. 9, mit einer Änderung des Durchganges 81, anstelle der Wärmequelle 9 angeordnet sein.

# DIPL.-ING. O. R. KRETZSCHMAR

## PATENTANWALT

Herr Architekt
Dipl.-Ing. Hartmut Grotjan
Seester 31

D-2201 Kurzenmoor

2 HAMBURG 1
BEIM STROHHAUSE 34
RUF 040/24 67 43
TELEX 2 173 645 OKPA D

ZUGELASSENER VERTRETER BEIM
EUROPÄISCHEN PATENTAMT

**0224063**

K/hö – 6648

2 8. Okt. 1986

Anwaltsakte: 6648

## Patentansprüche - Europa

1. Wandplatte für Bauwerke, mit einem Wandplattenkörper (4, 37) und einer an wenigstens einer Plattenseite sich über die Wandplatte erstreckenden Seitenwandplatte (7) und Anschlüssen für ein Wärmeträgermedium, dadurch gekennzeichnet, daß die Anschlüsse (10, 11) an einer Temperierungsquelle (9, 9'; 91) in einem Raum (8, 8') vorgesehen sind, der sich über die Fläche der Wandplatte (1) hinter einer durch eine Seitenwandplatte (7, 7') mit Wärmeleitvermögen geschlossenen Seite erstreckt, wobei die Temperierungsquelle als Wärmequelle (9, 9') unten und als Kühlquelle (91) oben in dem Raum (8, 8') angeordnet ist, der oben und unten durch Begrenzungsbauteile (2, 3; 22, 23) abgeschlossen ist.

2. Wandplatte nach Anspruch 2, dadurch gekennzeichnet, daß der seitliche Raum (8, 8') in sich geschlossen ist.

3. Wandplatte nach Anspruch 1 oder 2, dadurch gekennzeich-

KONTEN: DRESDNER BANK (BLZ 200 800 00) KONTO-NR. 9 229 371 · POSTSCHECK HAMBURG (BLZ 200 100 20) NR. 1937 66-206

net, daß der Raum (8) von einer Vielzahl von im wesentlichen vertikalen Kanälen gebildet wird, die jedoch
unten und/oder oben miteinander verbunden sind, wobei
der Raum durch im wesentlichen senkrechte Trennungsstreifen (14 - 16) unterteilt ist, die mit ihren Rändern in die an den Plattenseiten benachbarten Materialien der Wandplatte, den Wandplattenkörper (4) und die
Seitenwandplatte (7) eingebettet sind und mit Abstand
vom unteren und oberen Rand des Raumes (8) enden.

4. Wandplatte nach Anspruch 1 oder 2, dadurch gekennzeichnet, daß der Raum (8), gegebenenfalls in Form von Kanälen, parallel zur Flächenerstreckung der Wandplatte
(1) unterteilt ist und wenigstens eine Unterteilungswand (17) mit Abstand vom oberen und unteren geschlossenen Rand des Raumes, gegebenenfalls der Kanäle, endet, und daß eine sich im wesentlichen in der Mitte des
Raumes erstreckende Unterteilungswand (17) aus einem
wärmeisolierenden Material besteht.

5. Wandplatte nach Anspruch 4, dadurch gekennzeichnet, daß
die Wärmequelle (9) in diesem Raum im Bereich zwischen
der Unterteilungswand (17) und einer eine Innenseite
bildenden Seitenwandplatte (7) der Wandplatte (1) unten
bzw. die Kühlquelle (91) im Bereich zwischen der Unterteilungswand (17) und einer eine Innenseite bildenden
Seitenwandplatte (7) der Wandplatte (1) oben angeordnet
sind.

6. Wandplatte nach Anspruch 4, dadurch gekennzeichnet, daß
die Unterteilungswand (17) wenigstens im oberen Bereich
(83) der Wandplatte mit Öffnungen (84-89) versehen ist.

7. Wandplatte nach Anspruch 6, dadurch gekennzeichnet, daß die Öffnungen (84-89) über ihre Höhe verschiedenen Querschnitt haben.

8. Wandplatte nach einem der Ansprüche 4 bis 7, dadurch gekennzeichnet, daß in wenigstens einem der Teilräume (18, 19) neben der Unterteilungswand (17), gegebenenfalls am oberen und unteren Rand der Unterteilungswand, Fördervorrichtungen (77) für das strömungsfähige Wärmeträgermedium angeordnet sind.

9. Wandplatte nach einem der Ansprüche 1 und 3 bis 8, dadurch gekennzeichnet, daß an einer Seitenwandplatte (7), hinter welcher der Raum (8) für das strömungsfähige Wärmeträgermedium angeordnet ist, oben und unten Ein- und Austrittsöffnungen (29, 30) für das strömungsfähige Wärmeträgermedium angeordnet sind und wenigstens ein Teil der Ein- und/oder Austrittsöffnungen (29, 30) im Querschnitt einstellbar ist und Einstellschieber (35) vorgesehen sind.

10. Wandplatte nach einem der Ansprüche 1 bis 9, dadurch gekennzeichnet, daß zwei Räume (8, 8') beiderseits eines gegebenenfalls tragenden, mittleren Wandplattenkörpers (37) vorgesehen sind, wobei die Wandplatte für jeden der Räume (8, 8') eine Wärme- oder Kühlquelle (9, 9'; 91) aufweist.

11. Wandplatte nach einem der Ansprüche 1 bis 10, dadurch gekennzeichnet, daß die Wärme- oder Kühlquelle (9, 91) als Heiz- oder Kühlrohr wenigstens einen nach außen durchgeführten Anschluß aufweist, aber die Wärmequelle (9) als elektrische Widerstandsheizung ausgeführt sein kann.

12. Wandplatte nach einem der Ansprüche 1 bis 11, dadurch gekennzeichnet, daß in einem Teilraum (19) oberhalb der Wärmequelle (9) horizontale Querstreifen (80) mit Durchgängen (81) angeordnet sind, und daß an diesen Durchgängen Klappenventile (82) vorgesehen sind, die oberhalb der Wärmequelle (9) nach oben öffnen.

13. Wandplatte nach einem der Ansprüche 4 bis 12, dadurch gekennzeichnet, daß die Unterteilungswand (17) eine wellenförmige Profilierung (90) aufweist, wobei in einer Querschnittsebene die wellenförmige Profilierung etwa nach Art von Sinuswellen ausgeformt ist, die entweder mit horizontalen Wellenachsen oder mit senkrechten Wellenachsen vorgesehen ist.

Fig.1

# F i g.2

Fig.3

## Fig. 4

## Fig. 5

Fig.6

Fig.7

Fig.8

Fig. 9

Fig.10

Fig.11